# FASCICULE DE BREVET EUROPEEN

(11) **EP 2 385 095 B1**
(45) Date de publication et mention de la délivrance du brevet: **13.03.2019**
(21) Numéro de dépôt: 11290210.1
(22) Date de dépôt: 29.04.2011
(51) Int. Cl.: C10G 50/00, B01J 31/14

(54) **Procédé de production de base pour carburants à partir d'une charge éthylénique mettant en oeuvre au moins une étape d'oligomérisation en présence d'un système catalytique homogène**
Grundherstellungsverfahren für Kraftstoffe auf der Grundlage eines Ethyleneinsatzes, bei dem mindestens eine Oligomerisationsphase in Gegenwart eines homogenen katalytischen Systems umgesetzt wird
Method for producing a base for fuels using an ethylene feedstock performing at least one oligomerisation step in the presence of a homogeneous catalytic system

(30) Priorité: 06.05.2010 FR 1001953
(43) Date de publication de la demande: 09.11.2011
(73) Titulaire: IFP Energies nouvelles, 92500 Rueil-Malmaison (FR)
(72) Inventeur: Berard, Sandrine, 69360 Communay (FR); Harry, Stéphane, 38200 Jardin (FR); Touchais, Natacha, 38200 Vienne (FR); Magna, Lionel, Lyon (FR); Olivier-Bourbigou, Hélène, 69230 St. Genis Laval (FR); Popelin, Cedrik, 69440 Mornant (FR); Proriol, David, 69530 Brignais (FR); Saussine, Lucien, 78290 Croissy sur Seine (FR)
(74) Mandataire: IFP Energies nouvelles

(56) Documents cités:
- EP-B1- 0 215 609
- WO-A2-2004/026795
- GB-A- 2 326 885
- CARLINI C ET AL: "Catalytic performances of homogeneous systems based on alpha-nitroacetophenonate-nickel(II) complexes and organoaluminium compounds in ethylene oligomerisation", APPLIED CATALYSIS A: GENERAL, ELSEVIER SCIENCE, AMSTERDAM, NL, vol. 216, no. 1-2, 1 août 2001 (2001-08-01), pages 1-8, XP004247912, ISSN: 0926-860X, DOI: DOI:10.1016/S0926-860X(01)00519-1
- RADHAKRISHNAN K ET AL: "INFLUENCE OF ALKYLALUMINIUM ACTIVATORS AND MIXTURES THEOREOF ON ETHYLENE POLYMERIZATION WITH A TRIDENTATE BIS(IMINO)PYRIDINYLIRON COMPLEX", MACROMOLECULAR: RAPID COMMUNICATIONS, WILEY VCH VERLAG, WEINHEIM, DE, vol. 24, no. 3, 3 mars 2003 (2003-03-03), pages 251-254, XP001193189, ISSN: 1022-1336, DOI: DOI:10.1002/MARC.200390036
- SHIRAKI Y ET AL: "ZrCl4-TEA-EASC three-component catalyst for the oligomerization of ethylene: The role of organoaluminum co-catalysts and additives", JOURNAL OF MOLECULAR CATALYSIS A: CHEMICAL 20020918 ELSEVIER NL, vol. 187, no. 2, 18 septembre 2002 (2002-09-18), pages 283-294, XP002618410, DOI: DOI:10.1016/S1381-1169(02)00275-3

## Description

L'oligomérisation des oléfines légères possédant de 3 à 5 atomes de carbone issues principalement du FCC ou de l'hydrocraquage a été utilisée pour la production de bases pour carburants qui entrent pour une petite part dans la constitution des pools carburants (essence, carburéacteur et gazole moteur).
La plupart des procédés industrialisés mettent en oeuvre des catalyseurs hétérogènes acides : le Catpoly , le Polynaphta et le procédé Octol sont essentiellement dédiés à la production d'essence, le procédé MOGD à celle de distillats moyens et le SPGK de Shell peut être orienté au choix vers la production d'essence ou de distillats moyens.
Pour le procédé Dimersol d'Axens, des catalyseurs homogènes de type Ziegler à base de nickel ont été surtout appliqués à l'oligomérisation du propylène et de mélanges C3/C4, ainsi qu'à l'oligomérisation de l'éthylène et de mélanges C2/C3 (FCC off-gas) uniquement pour la production d'essence. (a) Chemistry and Industry, mai 1974, 375, Y. Chauvin, J. Gaillard, D.V. Quang, J. W. Andrews. b) Hydrocarbon Processing, mai 1982, 110-112. Y. Chauvin, J.F. Gaillard, J. Leonard, P. Bonnifay, J. W. Andrews). Dans ce cas, l'intervention de la catalyse de coordination permet une bonne réactivité de l'éthylène contrairement à ce qui est observé en catalyse acide.
Pour obtenir une essence de bonne qualité, un niveau de ramification élevé de l'oléfine est nécessaire car l'indice d'octane des oléfines et des paraffines augmente avec le taux de ramification.

Par contre, pour la production d'une base pour carburant gazole, il est nécessaire d'hydrogéner le mélange d'oligomères et un faible niveau de ramification est préférable car l'indice de cétane des paraffines décroît quand le taux de ramification augmente. Cependant un certain niveau de ramification est nécessaire pour obtenir de bonnes propriétés à froid et en particulier une fluidité à froid suffisante. Ce point est aussi particulièrement critique pour la production de produits destinés à la production de kérosène.

Ainsi, il existe plusieurs procédés d'oligomérisation de l'éthylène mettant en oeuvre des systèmes catalytiques homogènes, ces procédés étant dédiés à la production d'alpha oléfines linéaires qui sont utilisées, en fonction de leur longueur de chaîne, comme intermédiaires pour des applications en chimie (Lappin, G. R.; Sauer, J. D. (1989) Alphaolefins Applications Handbook; Marcel Decker Inc.: Berkeley, CA.). Ces procédés conduisent à des distributions d'oléfines plus ou moins larges, la fraction C10-C24 ne représentant qu'une partie des oligomères (environ 40 % maximum selon les calculs réalisés à partir de la loi de distribution de Schulz-Flory).

Ces produits étant linéaires, il n'est pas envisageable de les utiliser pour la production d'un carburant gazole et/ou kérosène directement après hydrogénation.
On ne trouve pas dans l'état de l'art antérieur de procédé d'oligomérisation de l'éthylène mettant en oeuvre un système catalytique homogène et permettant la production de base carburant incorporable dans un carburant de type distillats moyens, c'est à dire gazole et/ou kérosène. Or, on connait les limitations des catalyseurs solides acides vis-à-vis de leur réactivité avec l'éthylène. Au contraire, les catalyseurs homogènes sont très réactifs avec l'éthylène et conduisent à des productivités en oléfines supérieures très importantes. Cependant, ces procédés d'oligomérisation de l'éthylène conduisent généralement à des oléfines dont la linéarité les rend difficilement utilisables pour produire des bases incorporables dans un carburant de type gazole et/ou kérosène. Carlini C. et al (Applied catalysis A: General, 1 août 2001, pages 1-8) décrit un procédé d'oligomérisation d'éthylène comprenant l'oligomérisation de la charge d'éthylène en un mélange d'oléfines en présence d'un système catalytique homogène comprenant un précurseur de nickel. Un objectif de la présente invention est de fournir un procédé de production de bases hydrocarbonées distillats moyens, incorporables au pool carburant (gazole et/ou kérosène) avec des rendements maximisés, à partir d'une coupe C2 éthylénique, ladite coupe C2 étant de préférence produite à partir d'une charge issue de source renouvelable. Le procédé selon l'invention met en oeuvre un enchaînement d'étapes comprenant deux étapes d'oligomérisation catalysées par un système catalytique homogène, et une étape d'épuisement de l'éthylène étant mise en oeuvre entre les deux étapes d'oligomérisation.
Un autre objectif de la présente invention est de fournir un procédé de production de bases hydrocarbonées gazole et/ou kérosène présentant un bon indice de cétane ainsi que des bonnes propriétés à froid.

La présente invention décrit un procédé de production de bases pour carburants gazole et/ou kérosène à partir d'une charge C2 éthylénique, ledit procédé comprenant au moins une première étape d'oligomérisation de ladite charge en au moins un effluent hydrocarboné comprenant un mélange d'oléfines ayant majoritairement un nombre de carbone compris entre 4 et 30, ledit mélange d'oléfines comprenant une coupe C10-C24 présentant une linéarité moyenne supérieure à 60%, en présence d'un système catalytique homogène comprenant au moins un précurseur métallique à base de zirconium, comprenant également au moins un activateur choisi dans le groupe formé par le sesquichlorure d'éthylaluminium (EASC), le dichloroéthylaluminium (EADC), le dichloroisobutylaluminium, le chlorodiéthylaluminium (DEAC), le triéthylaluminium (TEA) et le triméthylaluminium (TMA), une deuxième étape d'oligomérisation d'au moins une partie de l'effluent issu de l'étape a), en au moins un effluent hydrocarboné comprenant un mélange d'oléfines ayant un nombre d'atomes de carbone majoritairement compris entre 4 et 30, ledit mélange d'oléfines comprenant une coupe C1O-C24 présentant une linéarité moyenne inférieure à 50%, en présence d'un système catalytique homogène identique à celui utilisé dans la première étape a) d'oligomérisation et au moins un activateur supplémentaire est introduit dans ladite deuxième étape b) d'oligomérisation, dans lequel l'effluent issu de l'étape a) subit avant l'étape b) une étape d'épuisement de l'éthylène, par tout moyen arrêtant l'introduction d'éthylène, de manière à produire au moins un effluent comprenant une quantité résiduelle en éthylène inférieure à 5% poids par rapport à la masse totale des hydrocarbures présentes dans ledit effluent, la linéarité moyenne étant définie comme étant le rapport du pourcentage poids d'oléfines linéaires présentes dans la coupe C10-C24 sur le pourcentage poids total d'oléfines présentes dans la coupe C10-C24.

La charge utilisée dans le procédé selon l'invention est une charge C2 éthylénique pouvant avantageusement provenir d'une unité de vapocraquage, d'une unité FCC ou d'une unité de synthèse Fischer-Tropsch.
Le terme FCC désigne le procédé de craquage catalytique en lit fluidisé de fractions pétrolières de point d'ébullition supérieur à environ 350 °C, par exemple un distillat sous vide, éventuellement de l'huile désasphaltée ou un résidu atmosphérique. Dans le cas ou la charge utilisée dans le procédé selon l'invention provient d'une unité FCC, la coupe C2 comprenant des composés ayant un nombre d'atomes de carbones égal à 2 de l'effluent du FCC comprend de l'éthylène et de l'éthane ainsi que d'autres composés en C2 tel que par exemple l'acétylène. Ladite coupe C2 issue d'une unité FCC est de préférence pré-traitée avant d'être utilisée dans le procédé selon l'invention.
Le vapocraquage est un procédé consistant à produire des oléfines par craquage thermique d'hydrocarbures paraffiniques en présence d'eau. Le vapocraquage produit les grands intermédiaires de la pétrochimie : éthylène, propylène, butènes, butadiène et benzène.
La synthèse Fischer-Tropsch peut permettre également de produire entre autres des oléfines, dont l'éthylène, à partir de gaz de synthèse, pouvant provenir de ressources fossiles (charbon, gaz ...) mais aussi de gazéification de ressources renouvelables. Par exemple, les procédés Fischer-Tropsch catalysés par des systèmes au fer à hautes températures sont connus pour conduire à des fractions légères riches en oléfines. Le gaz de synthèse peut également être converti en méthanol ou éthanol, l'éthanol pouvant générer de l'éthylène par déshydratation.
Ladite charge peut également avantageusement provenir de ressources non fossiles. Afin de s'affranchir de la consommation de pétrole et de réduire la consommation d'énergie, la charge selon l'invention peut également provenir de ressources non fossiles c'est à dire de sources renouvelables telles que celles issues de la culture de végétaux.
Dans le cas où la charge provient de sources renouvelable, la charge C2 éthylénique peut avantageusement résulter de la déshydratation d'éthanol produit à partir de source renouvelable issue de la biomasse aussi appelé bioéthanol. La synthèse de bioéthanol peut avantageusement être réalisée par fermentation d'au moins de trois sources : 1) le sucrose de canne ou de betterave, 2) l'amidon présent dans les céréales et les tubercules et 3) la cellulose et l'hémicellulose présente dans le bois, les herbes et autres biomasses lignocellulosiques, l'amidon, la cellulose et l'hémicellulose devant être hydrolysées en sucres avant de subir une étape de fermentation.

La matière végétale mise en oeuvre dans la production d'éthanol est tout d'abord avantageusement pré-traitée et hydrolysée selon des procédés de prétraitement et d'hydrolyse de la biomasse bien connus de l'homme du métier. Les étapes de fermentation de la matière végétale en éthanol sont également bien connues. Elles peuvent avantageusement mettre en oeuvre une ou plusieurs levures et sont avantageusement suivies d'une distillation permettant de récupérer de l'éthanol sous forme aqueuse.
L'étape de déshydratation d'éthanol éventuellement produit à partir de source renouvelable issue de la biomasse aussi appelé bioéthanol est avantageusement mise en oeuvre comme décrit dans ("Ethylene from Ethanol", N.K. Kochar, R. Merims, and A.S. Padia, CEP, Juin 1981) et dans les brevets US 4,232,179, US 4,396,789, US 4,234,752, US 4,396,789, US 4,698,452.

Dans le cas où la charge C2 éthylénique utilisée dans le procédé selon l'invention provient de la déshydratation d'éthanol produit à partir de source renouvelable issue de la biomasse, l'éthylène obtenu par déshydratation de l'éthanol subit de préférence une étape de purification avant d'être utilisé dans le procédé selon l'invention, de manière à éliminer les impuretés et au moins une partie et de préférence la totalité des composés oxygénés présents dans ladite coupe éthylénique C2 et à limiter la désactivation du catalyseur homogène d'oligomérisation placé en aval.
L'étape de purification est avantageusement mise en oeuvre par des moyens connus de l'homme du métier, tels que par exemple l'utilisation d'au moins une résine, de colonnes de lavage à l'eau, de colonnes de lavage à la soude, de l'adsorption sur solide choisis parmi les tamis moléculaires, le charbon actif, l'alumine et les zéolithes, la distillation, l'hydrogénation en présence d'un catalyseur à base de nickel, l'absorption par un solvant (liquide ionique ou autre) afin d'obtenir une charge purifiée répondant au niveau d'impuretés compatibles avec le catalyseur d'oligomérisation homogène placé en aval, cette liste n'étant pas exhaustive.

Quelque soit la source dont est issue la charge C2 éthylénique, ladite charge est de préférence purifiée de manière à ce que la charge C2 éthylénique obtenue corresponde aux spécifications d'une charge C2 de type polymer grade.
De manière générale, l'oligomérisation est l'addition de n oléfines identiques et/ou différentes. L'oligomérisation se distingue de la polymérisation par une addition de molécules en nombre limité, le chiffre n étant, selon l'invention, pour la plus grande partie pondérale au moins des oligomères, compris entre 2 et 60, et préférentiellement entre 2 et 40.
Conformément à l'étape a) du procédé selon l'invention, ladite charge C2 éthylénique subit une première étape d'oligomérisation en au moins un effluent hydrocarboné comprenant un mélange d'oléfines ayant un nombre de carbone majoritairement compris entre 4 et 30, ledit mélange d'oléfines comprenant une coupe C10-C24, ladite coupe présentant une linéarité moyenne supérieure à 60% et de préférence supérieure à 65%, en présence d'un système catalytique homogène comprenant au moins un précurseur métallique à base de zirconium. On entend, dans toute la suite du texte, par mélange d'oléfines ayant un nombre de carbone majoritairement compris entre 4 et 30, un mélange d'oléfines comprenant au moins 50% poids, de préférence au moins 60% poids et de manière préférée au moins 70% poids d'oléfines ayant un nombre d'atomes de carbone compris entre 4 et 30, les pourcentages étant exprimés en pourcentage poids par rapport à la masse totale du mélange d'oléfines. De la même façon, on entend, dans toute la suite du texte, par coupe C10-C24 un mélange d'oléfines ayant un nombre de carbone compris entre 10 et 24.
De préférence, ledit effluent hydrocarboné issu de la première étape d'oligomérisation comprend au moins 50% et de préférence au moins 70% poids d'un mélange d'oléfines ayant un nombre de carbone majoritairement compris entre 4 et 30, les pourcentages étant exprimés en pourcentage poids par rapport à la masse totale des composés hydrocarbonés présents dans ledit effluent hydrocarboné.
De préférence, ledit mélange d'oléfines ayant un nombre de carbone compris entre 4 et 30 comprend moins de 40% poids et de préférence moins de 35% poids d'un mélange d'oléfines ayant un nombre d'atome de carbone compris entre 10 et 24 (coupe C10-C24), les pourcentages étant exprimés en pourcentage poids par rapport à la masse totale des oléfines présents dans ledit mélange. Le complément à 100% comprend les coupes C4-C10 et C24-C30.
Conformément à la première étape d'oligomérisation du procédé selon l'invention, le mélange d'oléfines issu de ladite étape comprend une coupe C10-C24 présentant une linéarité moyenne supérieure à 60% et de préférence supérieure à 65%.
On entend par linéarité moyenne exprimée en pourcentage, le rapport du pourcentage d'oléfines linéaires présentes dans la fraction C10-C24 sur le pourcentage total d'oléfines présentes dans la fraction C10-C24.
La mesure de la linéarité est réalisée par chromatographie en phase gazeuse sur la coupe C10-C24 après hydrogénation de ladite coupe C10-C24.
La première étape a) d'oligomérisation de la charge C2 éthylénique est mise en oeuvre par catalyse homogène, c'est à dire que le catalyseur est soluble dans les produits d'oligomérisation pour former une seule phase liquide. Le système catalytique homogène utilisé dans la première étape a) d'oligomérisation comprend au moins un précurseur métallique à base de zirconium et au moins un activateur choisi dans le groupe formé par le sesquichlorure d'éthylaluminium (EASC), le dichloroéthylaluminium (EADC), le dichloroisobutylaluminium, le chlorodiéthylaluminium (DEAC), le triéthylaluminium (TEA) et le triméthylaluminium (TMA). Ces activateurs peuvent être utilisés seuls ou en mélange.

Ledit système catalytique homogène utilisé dans la première étape a) d'oligomérisation peut éventuellement également comprendre au moins un additif choisi parmi les composés acides de Bronsted, les bases et acides de Lewis, les composés organiques donneurs d'électrons contenant au moins un oxygène ou un azote ou un phosphore ou un soufre mono ou polyfonctionnel. A titre d'exemple on peut citer les aminés, les imines, les acides carboxyliques, les acétals, les cétals, les éthers ou les alcools.

Le composé acide de Bronsted répond à la formule HY, où Y est un anion organique, par exemple carboxylate, sulfonate ou phénolate. On préfère les acides dont le pKₐ à 20 °C est au maximum égal à 3, plus particulièrement ceux qui sont de plus solubles dans le composé de nickel ou dans sa solution dans un hydrocarbure ou un autre solvant convenable. Une classe d'acides préférée comprend le groupe formé par les acides halogénocarboxyliques de formule R₂COOH dans laquelle R₂ est un radical alkyle halogéné, notamment ceux qui renferment au moins un atome d'halogène en alpha du groupe -COOH avec au total de 2 à 10 atomes de carbone. On utilise de préférence un acide halogénoacétique de formule CXₚH₃₋ₚ-COOH dans laquelle X est le fluor, le chore, le brome ou l'iode, avec p entier de 1 à 3. A titre d'exemple, on peut citer les acides trifluoroacétique, difluoroacétique, fluoroacétique, trichloroacétique, dichoroacétique, chloroacétique. Ces exemples ne sont pas limitatifs, et on peut aussi utiliser les acides arylsulfoniques, alkylsulfoniques, fluoroalkylsulfoniques, l'acide picrique, l'acide nitroacétique. On utilise de préférence l'acide trifluoroacétique. Le système catalytique homogène est avantageusement mis en oeuvre pour le mode de préparation du système catalytique homogène comme décrit dans l'enseignement du brevet FR 2 693 455. De préférence, ledit système catalytique homogène comprend au moins un composé de zirconium, au moins un composé de l'aluminium en tant qu'activateur tels que décrits ci dessus et éventuellement au moins un composé organique en tant qu'additif. Les précurseurs métalliques à base de zirconium peuvent avantageusement être choisis parmi les halogénures de zirconium tels que le tétrachlorure de zirconium ZrCl₄, le tétrabromure de zirconium ZrBr₄, les alcoolates tels que le tétrapropylate de zirconium Zr(OC₃H₇)₄, le tétrabutylate de zirconium Zr(OC₄H₉)₄, les carboxylates tels que le tétra-éthyl-2-hexanoate de zirconium Zr(OCOC₇H₁₅)₄ ou les oxo-carboxylates comme 1-oxo-hexaéthyl-2-hexanoate de dizirconium [Zr(OCOC₇H₁₅)₃]₂O.
Les composés organiques utilisés comme additif sont avantageusement choisis parmi la classe des acétals et des cétals. On peut citer à titre d'exemples le diéthoxyméthane, le diisopropoxyméthane, le diéthoxy-1,1-éthane, le diisobutoxy-1,1-éthane, le diméthoxy-1,1-décane, le nonyl-2-dioxolane-1,3, le diméthoxy-2,2-propane, le dibutoxy-2,2-propane, le dioctoxy-2,2-propane, le di(2-éthylhexyloxy)-2,2-propane, le diméthoxy-2,2-octane, le diméthoxy-1,1-cyclohexane.

La première étape d'oligomérisation a) permet donc, par l'utilisation du système catalytique homogène décrit ci dessus, la production d'un effluent hydrocarboné comprenant une coupe C10-C24 dont la linéarité moyenne élevée ne permet pas son incorporation dans les bases carburant de type gazole et/ou kérosène. Par ailleurs, le rendement en coupe C10-C24 éventuellement incorporable aux bases carburants gazole et/ou kérosène à l'issue de la première étape d'oligomérisation a) reste faible.
La deuxième étape b) d'oligomérisation a donc pour objectif de favoriser le déplacement de la distribution des oléfines vers la coupe C10-C24 et d'en diminuer la linéarité moyenne.
Conformément à la deuxième étape b) du procédé selon l'invention, au moins une partie et de préférence la totalité de l'effluent issu de l'étape a) est envoyée dans une deuxième étape d'oligomérisation b) pour produire au moins un effluent hydrocarboné comprenant un mélange d'oléfines ayant un nombre d'atomes de carbone majoritairement compris entre 4 et 30, ledit mélange d'oléfines comprenant une coupe C10-C24 présentant une linéarité moyenne inférieure à 50%, en présence d'un système catalytique homogène identique à celui utilisé dans l'étape a). De préférence, ledit effluent hydrocarboné issu de la deuxième étape d'oligomérisation b) comprend au moins 50% et de préférence au moins 70% poids d'un mélange d'oléfines ayant un nombre de carbone majoritairement compris entre 4 et 30, les pourcentages étant exprimés en pourcentage poids par rapport à la masse totale des composés hydrocarbonés présents dans ledit effluent.
De préférence, ledit mélange d'oléfines ayant un nombre de carbone majoritairement compris entre 4 et 30 comprend au moins 45% poids et de préférence au moins 50% poids d'un mélange d'oléfines ayant un nombre d'atome de carbone majoritairement compris entre 10 et 24 (coupe C10-C24), les pourcentages étant exprimés en pourcentage poids par rapport à la masse totale des oléfines présents dans ledit mélange.
Conformément à la deuxième étape d'oligomérisation b) du procédé selon l'invention, le mélange d'oléfines issu de ladite étape comprend une coupe C10-C24 présentant une linéarité moyenne inférieure à 50% et de préférence inférieure à 40%.

Une étape d'épuisement de l'éthylène est mise en oeuvre entre la première et la deuxième étape d'oligomérisation a) et b). L'effluent hydrocarboné issu de la première étape a) subit avantageusement une étape d'épuisement de l'éthylène de manière à produire au moins un effluent comprenant une quantité résiduelle en éthylène avantageusement inférieure à 5% poids et de préférence inférieure à 1% poids par rapport à la masse totale des hydrocarbures présentes dans ledit effluent.
Cette étape d'épuisement de l'éthylène est avantageusement mise en oeuvre par tout moyen arrêtant l'introduction d'éthylène. Ainsi, l'éthylène non réagi lors la première étape a) d'oligomérisation et présent dans l'effluent issu de la première étape a) d'oligomérisation se consomme, du fait de sa forte réactivité, pour former des oléfines de point d'ébullition plus élevé. En cas de procédé discontinu, l'épuisement est avantageusement mis en oeuvre par la fermeture de la vanne d'alimentation en éthylène dans la première étape d'oligomérisation a). La pression au sein du réacteur de la première étape d'oligomérisation a) diminue jusqu'à devenir stable, ce qui est un signe de la consommation de l'éthylène résiduel au profit d'oléfines de poids moléculaire plus élevés.
En cas de procédé continu, l'effluent issu de la première étape d'oligomérisation a) est avantageusement envoyé dans un réacteur tubulaire sans ajout supplémentaire d'éthylène. La longueur de ce réacteur est avantageusement suffisamment longue pour permettre la consommation d'éthylène, non réagi lors la première étape a) d'oligomérisation et dissous dans ledit effluent au profit d'oléfines de point d'ébullition plus élevé.
De façon surprenante, cet épuisement de l'éthylène permet d'augmenter de façon notable la quantité de la fraction d'oléfines C10-C24 produite lors de la seconde étape b) d'oligomérisation.

Le système catalytique homogène utilisé dans la deuxième étape b) d'oligomérisation est identique à celui utilisé dans la première étape a) d'oligomérisation. Au moins un activateur supplémentaire est introduit dans ladite deuxième étape b. Au moins un additif supplémentaire peut avantageusement être introduit dans la deuxième étape b) d'oligomérisation. De manière plus préférée, le système catalytique homogène utilisé dans l'étape b) d'oligomérisation est identique à celui utilisé dans l'étape a) d'oligomérisation et comprend un précurseur de catalyseur à base de zirconium et un activateur à base de sesquichlorure d'éthylaluminium. Au moins un second activateur et de préférence le triéthylaluminium (TEA) est introduit dans ladite deuxième étape b) d'oligomérisation.
L'ajout d'au moins un activateur dans la deuxième étape b) d'oligomérisation permet d'augmenter de façon notable la quantité de la fraction d'oléfines C10-C24 produite lors de la seconde étape d'oligomérisation b) et ainsi d'augmenter le rendement final en distillats moyens.

L'effluent liquide sortant de la deuxième étape b) d'oligomérisation comprend à la fois ledit effluent oléfinique produit lors de l'étape d'oligomérisation b), ayant subi l'étape d'épuisement de l'éthylène et le système catalitique homogène utilisé dans les étapes a) et b) qui est soluble dans les produits d'oligomérisation. L'effluent liquide sortant de la deuxième étape b) d'oligomérisation est avantageusement envoyé dans une étape de traitement du système catalitique dans laquelle il est neutralisé, ladite étape de traitement du système catalitique étant avantageusement suivie d'une étape de séparation du système catalitique désactivé pour obtenir l'effluent oléfinique produit lors de la deuxième étape d'oligomérisation b) et exempt du système catalitique homogène désactivé. Par traitement du système catalytique, on entend neutralisation et/ou séparation du système catalytique dudit effluent sortant de la deuxième étape b) d'oligomérisation. L'étape de neutralisation et de séparation du système catalitique homogène sont mises en oeuvre selon les moyens connus de l'homme de métier.
De façon préférée, la neutralisation se fait avantageusement par ajout d'une base ou d'un acide. A titre d'exemple on peut citer les alcools, les acides gras, les amines grasses, l'ammoniac. La séparation du catalyseur peut avantageusement se faire par lavage avec une solution aqueuse. Le catalyseur s'il est soluble dans la phase aqueuse est avantageusement séparé de la phase organique par décantation.

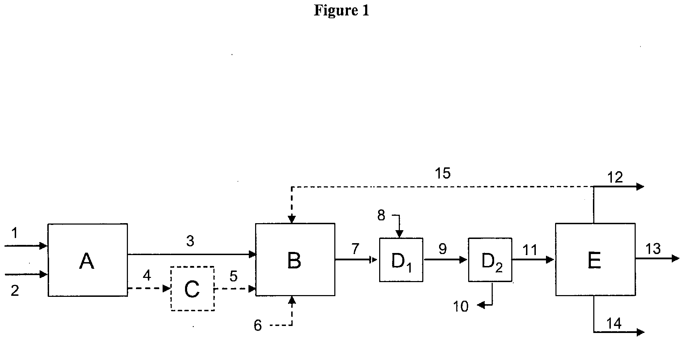

De façon préférée, sa neutralisation est avantageusement réalisée comme décrite dans les brevets US2009/0314986 ou WO2007/016990.
Ledit effluent oléfinique produit lors de la deuxième étape d'oligomérisation b) et ayant avantageusement subi les étapes de traitement et de séparation du système catalytique est ensuite avantageusement envoyé dans une étape de séparation dans au moins une colonne de distillation de manière à obtenir au moins deux coupes incorporables à la coupe essence pour la coupe comprenant des composés ayant un nombre de carbone compris entre 6 et 10 et incorporables à la coupe distillats moyens (gazole et/ou kérosène) pour la coupe comprenant des composés ayant un nombre de carbone compris entre 10 et 24. Un effluent léger comprenant majoritairement les composés C4 peut également être séparé. Une fraction lourde comprenant les composés ayant un nombre d'atome de carbone supérieur à 24 peut également être avantageusement séparée. Ces produits cités ne sont nullement restrictifs.
Au moins une partie de l'effluent léger comprenant les composés C4 et/ou au moins une partie de la coupe essence issues de l'étape de séparation peuvent avantageusement être recyclées dans la deuxième étape b) d'oligomérisation du procédé selon l'invention.
Un des objectifs de la présente invention étant de maximiser le rendement en base distillats moyens, ledit effluent léger et la coupe essence, non désirés, sont ainsi à nouveau oligomérisés dans la deuxième étape b) d'oligomérisation du procédé selon l'invention permettant l'augmentation de leur poids moléculaire et ainsi l'augmentation de leur point d'ébullition pour les rendre compatibles avec l'utilisation recherchée.
Les étapes d'oligomérisation du procédé selon l'invention sont avantageusement mises en oeuvre en continu.
La mise en oeuvre de la première étape d'oligomérisation peut avoir lieu de façon préférée dans un réacteur agité telle que décrit ci-dessous. La solution contenant le système catalytique est injectée dans le réacteur d'oligomérisation a) opérant en phase liquide, en même temps que la charge C2 éthylénique introduite par une vanne permettant de maintenir la pression constante au sein du réacteur. Le réacteur est un réacteur agité par des moyens connus de l'homme du métier tels que réacteur agité de façon mécanique et isotherme, refroidi par double enveloppe ou serpentin interne, ou de manière préférée agité par recirculation externe avec un recycle ayant été avantageusement refroidi afin d'extraire la chaleur de réaction. Le recycle est interne à l'unité d'oligomérisation, il n'est pas représenté sur la figure 1.
Une vanne permet de maintenir le niveau de liquide constant permettant ainsi d'extraire du réacteur un débit massique égal au débit massique des fluides introduits (système catalytique, charge C2 éthylénique et recycle éventuel).
La première étape d'oligomérisation peut avantageusement avoir lieu dans un ou plusieurs réacteurs en série ou en parallèle.
La mise en oeuvre de la deuxième étape d'oligomérisation peut avantageusement avoir lieu dans tout type de réacteur tels que par exemple les réacteurs tubulaires ou agités.
De préférence, la seconde étape d'oligomérisation est avantageusement mise en oeuvre dans un réacteur de type tubulaire où la chaleur est évacuée au moyen d'une double enveloppe recouvrant le tube. La charge liquide est avantageusement introduite avec l'activateur et/ou éventuellement avec au moins un additif.
Dans un mode particulier de mise en oeuvre de la réaction catalytique d'oligomérisation en discontinu, la solution contenant le système catalytique est injectée dans le réacteur d'oligomérisation a) opérant en phase liquide, en même temps que la charge C2 éthylénique introduite par une vanne permettant de maintenir la pression constante au sein du réacteur. Les mêmes types de réacteurs que pour la mise en oeuvre en continu sont utilisés dans les étape a et b) d'oligomérisation. Les produits formés s'accumulent dans le réacteur de l'étape b) pendant la durée requise de la réaction. Après la durée de réaction, le réacteur est alors refroidi, les systèmes catalytiques sont alors détruits par injection d'amine par exemple et les produits obtenus sont extraits et lavés.
Lors de la préparation de la composition catalytique utilisée dans les étapes a) et b) d'oligomérisation, le précurseur métallique, l'activateur et éventuellement l'additif organique peuvent être mis en contact dans un ordre quelconque dans un solvant choisi dans le groupe formé par les hydrocarbures aliphatiques et cycloaliphatiques tels que l'hexane, le cyclohexane, l'heptane, le butane ou l'isobutane, par un hydrocarbure aromatique tel que le benzène, le toluène, l'orthoxylène, le mésitylène, l'éthylbenzène, ou par un hydrocarbure chloré tel que le chlorobenzène, pur ou en mélange. On utilise avantageusement les hydrocarbures aliphatiques comme le n-heptane et les hydrocarbures aromatique comme l'orthoxylène. La concentration du zirconium, dans la solution catalytique est avantageusement comprise entre 1.10⁻⁶ et 1 mol/L. Le rapport molaire entre l'activateur et ledit précurseur métallique est avantageusement compris entre 1/1 et 1800/1, de préférence 2/1 et 800/1, de manière encore plus préférée entre 3/1 et 100/1. La température à laquelle les composants du systèmes catalytique sont mélangés est avantageusement comprise entre -10 et 180°C, de préférence entre 0 et 150°C, par exemple à une température voisine de l'ambiante (15 à 30°C). Le mélange peut être effectué sous une atmosphère d'éthylène ou de gaz inerte.
La réaction d'oligomérisation décrite dans les étapes a) et b) selon l'invention est avantageusement effectuée sous une pression totale de 0 à 200 bar, de préférence de 1 à 100 bar, et à une température de 20 à 180°C, de préférence de 40 à 140°C.

### Description de la figure

La figure 1 représente schématiquement le procédé de production de bases pour carburants (type gazole et/ou kérosène) à partir d'une charge C2 éthylénique, ledit procédé comprenant au moins une première étape d'oligomérisation suivie d'une deuxième étape d'oligomérisation, une étape d'épuisement de l'éthylène étant mise en oeuvre entre lesdites étapes d'oligomérisation opérant en présence d'un système catalytique homogène identique.

La charge C2 éthylénique est introduite dans une première zone réactionnelle (A) via la conduite (1) dans laquelle ladite charge subit une première étape d'oligomérisation. Le système catalytique homogène utilisé dans la première zone réactionnelle (A) est introduit via la conduite (2). L'effluent hydrocarboné produit dans la zone réactionnelle (A) sort de la zone réactionnelle (A) via la conduite (3) et est envoyé dans une seconde zone réactionnelle (B) dans laquelle il subit une deuxième étape d'oligomérisation en présence d'un système catalytique homogène identique à celui utilisé dans la zone réactionnelle (A). Un activateur et avantageusement un additif sont introduits dans la zone réactionnelle (B) via la conduite (6) représentée en pointillé. Une zone (C) d'épuisement de l'éthylène représentée en pointillée, est mise en oeuvre entre les deux zone réactionnelles (A) et (B), ladite zone d'épuisement de l'éthylène comportant une conduite (4) pour l'introduction de l'effluent issu de la zone réactionnelle (A) et une conduite (5) pour la sortie de l'effluent.

Dans une réalisation préférée, la zone B est suivie d'une zone D (D1 et D2) représentée en pointillée, de traitement du système catalitique, comportant une conduite (8) pour l'introduction de composés chimiques permettant la neutralisation du système catalitique dans (D1), une conduite (9) pour la l'introduction de l'effluent de (D1) dans (D2), et une conduite (10) permettant la sortie du système catalitique désactivé de (D2). La zone (D2) est suivie d'une zone (E) de séparation des produits issus des étapes précédentes, qui comporte une conduite (11) pour l'introduction de l'effluent issu de la zone (D2), une conduite (12) pour la sortie des produits ayant un nombre de carbone compris entre 4 et 10 (coupe essence), une conduite (13) pour la sortie des composés ayant un nombre de carbone compris entre 10 et 24 (coupe kérosène et gazole) et une conduite (14) pour la sortie des composés ayant un nombre d'atomes de carbone supérieur à 24.

Selon un mode de réalisation représenté en pointillés, la zone réactionnelle (B) comporte une conduite (15) pour l'introduction des oléfines légères issues de la zone (E) de séparation.

Les exemples suivants illustrent l'invention sans en limiter la portée.

### EXEMPLE 1 : comparatif

Ce premier exemple décrit un test illustrant l'oligomérisation de l'éthylène en une seule étape.

Dans un autoclave en acier inoxydable d'un volume utile de 250 mL, muni d'une double enveloppe permettant de réguler la température par circulation d'eau ou d'huile, on introduit, dans l'ordre, sous atmosphère d'argon et à température ambiante: 20 mL de cyclohexane, 3,5 mL d'une solution d'ortho-xylène contenant 0,2 mmol de ZrCl₄ et 0,2 mmol de di(2-éthylhexyloxy)-2,2-propane. On introduit ensuite 1,2 mmol de sesquichlorure d'éthylaluminium Al₂Et₃Cl₃ (EASC) préalablement solubilisé dans 2,5 mL d'ortho-xylène, soit un rapport molaire Al/Zr = 12. La température est alors portée à 100 °C tout en introduisant dans l'autoclave de l'éthylène de manière à maintenir une pression constante de 3,5 MPa. On laisse la réaction se poursuivre durant une heure. Après 1 heure de réaction, l'introduction d'éthylène est arrêtée et le réacteur refroidi à 20°C. On injecte alors dans l'autoclave environ 1 mL de dodecylamine de manière à neutraliser l'ensemble du système catalytique. L'autoclave est ensuite dépressurisé et on recueille une fraction gazeuse et une fraction liquide qui sont analysées par chromatographie.

La productivité du système est la masse de produit formé par gramme de zirconium initialement introduit. Elle se mesure selon une méthode connue de l'homme du métier. La productivité est de 1911 g / g Zr. La distribution des oléfines représentant la répartition des oléfines par nombre d'atomes de carbone dans l'effluent, déterminée par chromatographie en phase gazeuse (CPG), ainsi que la mesure de la linéarité des oléfines par nombre de carbone obtenues sont données dans le tableau 1.

**Tableau 1: Distribution et linéarité des oléfines obtenues**

| | Distribution (% poids d'oléfines par nombre d'atomes de carbone) | Linéarité par nombre de carbone (% pds) |
|---|---|---|
| C4 | 22,5 | 100 |
| C6 | 26,9 | 96,7 |
| C8 | 16,5 | 93,1 |
| C10 | 10,8 | 84,5 |
| C12 | 7,2 | 77,3 |
| C14 | 5,2 | 71,0 |
| C16 | 3,6 | 64,0 |
| C18 | 2,5 | 59,4 |
| C20 | 1,4 | 53,9 |
| C22 | 0,9 | 49,5 |
| C24 | 0,5 | 43,6 |
| C26 | 0,2 | 49,6 |
| C28 | 0,1 | < 50 |
| C30 | 0,1 | < 50 |
| C30+ | < 0,1 | < 50 |

La mesure de la linéarité par nombre de carbone est réalisée par chromatographie en phase gazeuse sur la coupe étudiée après hydrogénation de ladite coupe.

La linéarité moyenne exprimée en pourcentage de la fraction C4-C30, étant le rapport du pourcentage d'oléfines linéaires présentes dans la fraction C4-C30 sur le pourcentage total d'oléfines présentes dans la fraction C4-C30 est de 89,1%.
Cet exemple met en évidence qu'une coupe distillats moyens peut être obtenue par oligomérisation de l'éthylène avec le système catalytique et les conditions opératoires décrites ci-dessus. 32.1 % des oligomères obtenus sont des composés ayant entre 10 et 24 atomes de carbones, compatible avec le "pool distillats moyens" gazole et kérosène. La coupe C10-C24 présente une linéarité moyenne de 73,5% exprimée en pourcentage étant le rapport du pourcentage d'oléfines linéaires présentes dans la fraction C10-C24 sur le pourcentage total d'oléfines présentes dans la fraction C10-C24, ce qui n'est a priori pas compatible avec de bonnes propriétés à froid du distillats moyens.

### EXEMPLE 2 : conforme à l'invention

Cet exemple met en oeuvre l'enchainement du procédé selon l'invention à savoir une première étape d'oligomérisation a) suivie d'une étape d'épuisement de l'éthylène puis d'une deuxième étape d'oligomérisation b) dans laquelle le système catalytique utilisé est identique à celui utilisé dans la première étape. Une injection d'activateur (TEA) est réalisée dans la deuxième étape b) d'oligomérisation permettant l'augmentation du rendement en distillat moyen, ainsi que la ramification de l'effluent en sortie de ladite deuxième étape b) et donc la diminution de sa linéarité moyenne, permettant ainsi l'obtention de meilleures propriétés a froid des bases distillats moyens obtenues.

Dans le même appareillage que celui qui a été utilisé dans l'exemple 1, on introduit dans l'ordre, sous atmosphère d'argon et à la température ambiante: 20 mL de cyclohexane, 3,5 mL d'une solution d'ortho-xylène contenant 0,2 mmol de ZrCl₄ et 0,2 mmol de di(2-éthylhexyloxy)-2,2-propane. On introduit ensuite 1,2 mmol de sesquichlorure d'éthylaluminium Al₂Et₃Cl₃ (EASC) préalablement solubilisé dans 2,5 mL d'ortho-xylène, soit un rapport molaire Al/Zr = 12. La température est alors portée à 100 °C tout en introduisant dans l'autoclave de l'éthylène de manière à maintenir une pression constante de 3,5 MPa. On laisse la réaction se poursuivre durant une heure.
La distribution des oléfines ainsi que la mesure de la linéarité des oléfines par nombre de carbone dans l'effluent issu de la première étape d'oligomérisation obtenues sont identiques à celle de l'exemple 1 et sont données dans le tableau 1.

Après 1 heure de réaction, l'introduction d'éthylène est arrêtée. A l'issue de l'épuisement de l'éthylène, la quantité résiduelle de l'éthylène dans l'effluent est de 1% poids par rapport à la masse totale des oléfines présentes dans ledit effluent. On injecte 3 mL d'une solution de xylène contenant 0,8 mmol de triéthylaluminium (TEA). L'agitation est maintenue ainsi que la température qui est maintenue à 100°C pendant 4h supplémentaire. LA pression est également maintenue constante à 3,5 MPa. L'agitation est alors stoppée et le réacteur refroidi à 20°C. On injecte ensuite dans l'autoclave environ 1 mL de dodecylamine de manière à neutraliser l'ensemble du système catalytique. L'autoclave est ensuite dépressurisé et on recueille une fraction gazeuse et une fraction liquide qui sont analysées par chromatographie.

La productivité du système est de 2733 g / g Zr. La distribution des oléfines, déterminée par chromatographie en phase gazeuse (CPG), ainsi que la mesure de la linéarité par coupe des oléfines obtenues sont données dans le tableau 2.

**Tableau 2: Distribution et linéarité des oléfines obtenues**

| | Distribution (% poids d'oléfines par nombre d'atomes de carbone) | Linéarité par nombre de carbone (% pds) |
|---|---|---|
| C4 | 8,2 | 100 |
| C6 | 9,8 | 82,5 |
| C8 | 10,9 | 53,5 |
| C10 | 10,8 | 40,7 |
| C12 | 9,9 | 33,6 |
| C14 | 8,7 | 27,3 |
| C16 | 7,5 | 23,5 |
| C18 | 6,8 | 19,3 |
| C20 | 5,4 | 18,9 |
| C22 | 4,7 | 17,3 |
| C24 | 3,6 | 13,1 |
| C26 | 3,5 | 14,6 |
| C28 | 2,1 | < 15 |
| C30 | 2,1 | < 15 |
| C30+ | 5,0 | < 15 |

La linéarité moyenne exprimée en pourcentage de la fraction C4-C30, étant le rapport du pourcentage d'oléfines linéaires présentes dans la fraction C4-C30 sur le pourcentage total d'oléfines présentes dans la fraction C4-C30 est de 41,2%.
57,4% des oligomères obtenus sont des composés ayant entre 10 et 24 atomes de carbones, compatible avec le "pool distillats moyens" gazole et kérosène. On constate donc que l'enchaînement des étapes selon l'invention, permet d'augmenter le rendement en base distillats moyens (coupe C10-C24) (57,4 %). Cette coupe C10-C24 présente par ailleurs une linéarité moyenne de 27% ce qui est beaucoup plus faible que la linéarité moyenne obtenue dans l'exemple 1, à l'issue d'une seule étape d'oligomérisation.
La deuxième étape b) d'oligomérisation permet donc de favoriser le déplacement de la distribution des oléfines vers la coupe C10-C24 et d'en diminuer la linéarité moyenne de manière à les rendre incorporable aux bases carburants gazole 5 (l'indice de cétane de la coupe gazole est supérieur à 60) et/ou kérosène.
Cette diminution de la linéarité moyenne permet une amélioration des propriétés à froid de la fraction distillats moyens obtenus (point de trouble = -11°C ; température limite de filtrabilité = -11°C).

## Revendications

1. Procédé de production de bases pour carburants gazole et/ou kérosène à partir d'une charge C2 éthylénique, ledit procédé comprenant au moins une première étape d'oligomérisation de ladite charge en au moins un effluent hydrocarboné comprenant un mélange d'oléfines ayant majoritairement un nombre de carbone compris entre 4 et 30, ledit mélange d'oléfines comprenant une coupe C10-C24 présentant une linéarité moyenne supérieure à 60%, en présence d'un système catalytique homogène comprenant au moins un précurseur métallique à base de zirconium, comprenant également au moins un activateur choisi dans le groupe formé par le sesquichlorure d'éthylaluminium (EASC), le dichloroéthylaluminium (EADC), le dichloroisobutylaluminium, le chlorodiéthylaluminium (DEAC), le triéthylaluminium (TEA) et le triméthylaluminium (TMA), une deuxième étape d'oligomérisation d'au moins une partie de l'effluent issu de l'étape a), en au moins un effluent hydrocarboné comprenant un mélange d'oléfines ayant un nombre d'atomes de carbone majoritairement compris entre 4 et 30, ledit mélange d'oléfines comprenant une coupe C10-C24 présentant une linéarité moyenne inférieure à 50%, en présence d'un système catalytique homogène identique à celui utilisé dans la première étape a) d'oligomérisation et au moins un activateur supplémentaire est introduit dans ladite deuxième étape b) d'oligomérisation, dans lequel l'effluent issu de l'étape a) subit avant l'étape b) une étape d'épuisement de l'éthylène, par tout moyen arrêtant l'introduction d'éthylène, de manière à produire au moins un effluent comprenant une quantité résiduelle en éthylène inférieure à 5% poids par rapport à la masse totale des hydrocarbures présentes dans ledit effluent, la linéarité moyenne étant définie comme étant le rapport du pourcentage poids d'oléfines linéaires présentes dans la coupe C10-C24 sur le pourcentage poids total d'oléfines présentes dans la coupe C10-C24.

2. Procédé selon la revendication 1 dans lequel la charge C2 éthylénique provient de la déshydratation d'éthanol produit à partir de source renouvelable issue de la biomasse.

3. Procédé selon la revendication 1 ou 2 dans lequel le système catalytique homogène utilisé dans l'étape b) d'oligomérisation et identique à celui utilisé dans l'étape a) d'oligomérisation et comprend un précurseur de catalyseur à base de zirconium et un activateur à base de sesquichlorure d'éthylaluminium et au moins un second activateur, le triéthylaluminium (TEA) est introduit dans la deuxième étape b).

4. Procédé selon l'une des revendications 1 à 3 dans lequel l'effluent liquide sortant de la deuxième étape b) d'oligomérisation est envoyé dans une étape de traitement du système catalytique dans laquelle il est neutralisé, ladite étape de traitement du système catalytique étant suivie d'une étape de séparation du système catalytique désactivé pour produire ledit effluent oléfinique produit lors de l'étape d'oligomérisation b) exempt du système catalytique.

5. Procédé selon l'une des revendications 1 à 4 dans lequel ledit effluent oléfinique produit lors de la deuxième étape d'oligomérisation b) est envoyé dans une étape de séparation dans au moins une colonne de distillation de manière à obtenir au moins un effluent léger comprenant majoritairement les composés C4, une coupe essence et une coupe distillats moyens (gazole et/ou kérosène).

6. Procédé selon l'une des revendications 1 à 5 dans lequel au moins une partie de l'effluent léger comprenant les composés C4 et/ou au moins une partie de la coupe essence issus de l'étape de séparation sont recyclées dans la deuxième étape d) d'oligomérisation du procédé selon l'invention.

7. Procédé selon l'une des revendications 1 à 6 dans lequel la première et la deuxième étape d'oligomérisation opèrent à une température comprise entre 20 °C et 180 °C, et à une pression comprise entre 0 et 20 MPa.

## Patentansprüche

1. Verfahren zur Erzeugung der Grundlagen für Diesel- und/oder Kerosinkraftstoffe aus einer Ethylenfraktion C2, wobei das Verfahren mindestens einen ersten Schritt der Oligomerisation der Fraktion in mindestens einen Kohlenwasserstoffabfluss umfasst, umfassend ein Olefingemisch, das mehrheitlich eine Kohlenstoffzahl zwischen 4 und 30 hat, wobei das Olefingemisch eine Fraktion C10-C24 umfasst, die eine mittlere Linearität über 60 % aufweist, im Beisein eines homogenen katalytischen Systems, umfassend mindestens eine metallische Vorstufe auf Basis von Zirkonium, umfassend auch mindestens einen Aktivator, ausgewählt in der Gruppe, die von Ethylaluminiumsesquichlorid (EASC), Dichlorethylaluminium (EADC), Dichlorisobutylaluminium, Chlordiethylaluminium (DEAC), Trietehylaluminium (TEA) und Trimethylaluminium (TMA) gebildet ist, einen zweiten Schritt der Oligomerisation mindestens eines Teils des aus Schritt a) stammenden Abflusses in mindestens einen Kohlenwasserstoffabfluss, umfassend ein Olefingemisch mit einer Kohlenstoffatomzahl mehrheitlich zwischen 4 und 30, wobei das Olefingemisch eine Fraktion C10-C24 umfasst, die eine mittlere Linearität unter 50 % aufweist, im Beisein eines homogenen katalytischen Systems identisch mit dem in dem ersten Oligomerisationsschritt a) verwendeten, und wobei mindestens ein zusätzlicher Aktivator in dem zweiten Oligomerisationsschritt b) eingeführt wird, bei dem der aus dem Schritt a) stammende Abfluss vor dem Schritt b) einem Ethylenverarmungsschritt durch jedes Mittel, das die Einleitung von Ethylen stoppt, unterzogen wird, um mindestens einen Abfluss zu erzeugen, umfassend eine Restmenge an Ethylen unter 5 Gew.-% bezogen auf die Gesamtmasse der in dem Abfluss vorhandenen Kohlenwasserstoffe, wobei die mittlere Linearität als das Verhältnis des Gewichtsprozentsatzes von linearen Olefinen, die in der Fraktion C10-C24 vorhanden sind, zum Gesamtgewichtsprozentsatz von Olefinen, die in der Fraktion C10-C24 vorhanden sind, definiert ist.

2. Verfahren nach Anspruch 1, bei dem die Ethylenfraktion C2 von der Dehydrierung von Ethanol stammt, das aus einer erneuerbaren Quelle aus Biomasse erzeugt wird.

3. Verfahren nach Anspruch 1 oder 2, bei dem das homogene katalytische System, das in dem Oligomerisationsschritt b) verwendet wird und mit dem in dem Oligomerisationsschritt a) verwendeten identisch ist, eine Katalysatorvorstufe auf Basis von Zirkonium und einen Aktivator auf Basis von Ethylaluminiumsesquichlorid und mindestens einen zweiten Aktivator umfasst, wobei Triethylaluminium (TEA) in den zweiten Schritt b) eingeleitet wird.

4. Verfahren nach einem der Ansprüche 1 bis 3, bei dem der flüssige Abfluss, der aus dem zweiten Oligomerisationsschritt b) austritt, in einen Behandlungsschritt des katalytischen Systems geschickt wird, in dem er neutralisiert wird, wobei auf den Behandlungsschritt des katalytischen Systems ein Schritt der Trennung des deaktivierten katalytischen Systems folgt, um den Olefinabfluss zu erzeugen, der in dem Oligomerisationsschritt b) ohne das katalytische System erzeugt wird.

5. Verfahren nach einem der Ansprüche 1 bis 4, bei dem der Olefinabfluss, der in dem zweiten Oligomerisationsschritt b) erzeugt wird, in einen Trennungsschritt in mindestens einer Destillationssäule geschickt wird, um mindestens einen leichten Abfluss zu erhalten, umfassend mehrheitlich die Verbindungen C4, eine Benzinfraktion und eine mittlere Destillatfraktion (Diesel und/oder Kerosin).

6. Verfahren nach einem der Ansprüche 1 bis 5, bei dem mindestens ein Teil des leichten Abflusses, umfassend die Verbindungen C4, und/oder mindestens ein Teil der Benzinfraktion, die aus dem Trennungsschritt stammen, in dem zweiten Oligomerisationsschritt d) des erfindungsgemäßen Verfahrens wiedergewonnen werden.

7. Verfahren nach einem der Ansprüche 1 bis 6, bei dem der erste und der zweite Oligomerisationsschritt bei einer Temperatur zwischen 20 °C und 180 °C und einem Druck zwischen 0 und 20 MPa durchgeführt werden.

## Claims

1. Process for the production of bases for diesel and/or kerosene fuels from a C2 ethylene feedstock, whereby said process comprises at least a first stage for oligomerization of said feedstock into at least one hydrocarbon effluent that comprises a mixture of olefins that for the most part have between 4 and 30 carbons, whereby said olefin mixture comprises a C10-C24 fraction that has a mean linearity that is greater than 60%, in the presence of a homogeneous catalytic system that comprises at least one zirconium-based metal precursor, comprising also at least one activator that is selected from the group that is formed by ethyl aluminum sesquichloride (EASC), dichloroethyl aluminum (EADC), dichloroisobutyl aluminum, chlorodiethyl aluminum (DEAC), triethyl aluminum (TEA), and trimethyl aluminum (TMA), a second stage for oligomerization of at least a portion of the effluent that is obtained from stage a), into at least one hydrocarbon effluent that comprises a mixture of olefins that for the most part have between 4 and 30 carbon atoms, with said olefin mixture comprising a C10-C24 fraction that has a mean linearity that is less than 50%, in the presence of a homogeneous catalytic system that is identical to the one that is used in the first oligomerization stage a) and at least one supplementary activator is introduced into the said second oligomerization stage b), in which the effluent that is obtained from stage a) undergoes before the stage b) a stage for draining ethylene, by any means that stops the introduction of ethylene, in such a way as to produce at least one effluent that comprises a residual quantity of ethylene that is less than 5% by weight relative to the total mass of the hydrocarbons that are present in said effluent, mean linearity being expressed in terms of percentage is defined as the ratio of the percentage by weight of linear olefins that are present in the C10-C24 fraction to the total percentage by weight of olefins that are present in the C10-C24 fraction.

2. Process according to Claim 1, in which the C2 ethylene feedstock comes from dehydration of ethanol produced from a renewable source that is obtained from biomass.

3. Process according to one of Claims 1 or 2, in which the homogeneous catalytic system that is used in oligomerization stage b) [is] identical to the one that is used in oligomerization stage a) and comprises a zirconium-based catalyst precursor and an ethyl aluminum sesquichloride-based activator, and at least a second activator, triethyl aluminum (TEA), is introduced into the second stage b).

4. Process according to one of Claims 1 to 3, in which the liquid effluent that exits from the second oligomerization stage b) is sent into a stage for treatment of the catalytic system in which it is neutralized, whereby said stage for treatment of the catalytic system is followed by a stage for separation of the deactivated catalytic system for producing said olefinic effluent that is produced during the oligomerization stage b) that is free of the catalytic system.

5. Process according to one of Claims 1 to 4, in which said olefinic effluent that is produced during the second oligomerization stage b) is sent into a separation stage in at least one distillation column in such a way as to obtain at least one light effluent that for the most part comprises the C4 compounds, a gasoline fraction, and a middle distillate fraction (diesel and/or kerosene).

6. Process according to one of Claims 1 to 5, in which at least a portion of the light effluent that comprises the C4 compounds and/or at least a portion of the gasoline fraction that is obtained from the separation stage are recycled in the second oligomerization stage d) of the process according to the invention.

7. Process according to one of Claims 1 to 6, in which the first and the second oligomerization stages work at a temperature of between 20°C and 180°C, and at a pressure of between 0 and 20 MPa.
